# EUROPÄISCHE PATENTANMELDUNG

(11) **EP 0 733 837 A1**
(43) Veröffentlichungstag der Anmeldung: **25.09.1996**
(21) Anmeldenummer: 96103536.7
(22) Anmeldetag: 07.03.1996
(51) Int. Cl.: F16K 25/00, F16K 11/078, F16K 3/08

(54) **Scheibenverbund**

(30) Priorität: 21.03.1995 DE 19510204
(71) Anmelder: Hoechst CeramTec AG, 65929 Frankfurt am Main (DE)
(72) Erfinder: Schmeissner, Reinhold, D-95100 Selb (DE)
(74) Vertreter: Kachholz, Traudel

(57) **Zusammenfassung**

Die Erfindung betrifft einen Scheibenverbund zur Verwendung als Einlaß- oder Regelscheibe, wobei eine Trägerscheibe und mindestens eine Hartstoffscheibe mit einer Funktionsoberfläche übereinander angeordnet sind, die Träger- und die Hartstoffscheibe miteinander reib-, kraft-, form- und/oder stoffschlüssig verbunden sind, die Trägerscheibe eine Dicke von mindestens 0,6 mm und die Hartstoffscheibe eine Dicke von 0,05 bis 2,5 mm aufweist und die Hartstoffscheibe aus einem Werkstoff mit einer Vickers-Kleinlasthärte von mindestens 1300 HV 0,5 besteht. Die Erfindung betrifft ferner ein Verfahren zur Herstellung eines Scheibenverbundes, bei dem eine Trägerscheibe und mindestens eine Hartstoffscheibe mit einer Funktionsoberfläche übereinander angeordnet werden und aneinandergrenzende Flächen aufweisen und bei dem eine reib-, kraft-, form- und/oder stoffschlüssige Verbindung der Trägerscheibe mit der Hartstoffscheibe durch Kleben, mechanische Verzahnung und/oder Zusammenfügen von rauhen, aneinandergrenzenden Flächen hergestellt wird.

## Beschreibung

Die Erfindung betrifft einen Scheibenverbund aus einer Trägerscheibe und mindestens einer Hartstoffscheibe mit Funktionsoberfläche zur Verwendung als Einlaß- oder Regelscheibe.

Einlaß- und Regelscheiben aus einem Hartstoff, vor allem aus Aluminiumoxidkeramik, werden als einteilige Scheiben in großen Serien für Sanitärarmaturen und Getränkezubereitungsvorrichtungen hergestellt. Meistens werden hierfür zwei oder drei einteilige Scheiben zu einer Paarung zusammengestellt. Oft laufen in einer Paarung Scheiben gegeneinander, die alle aus einem Aluminiumoxid-reichen Werkstoff bestehen oder bei denen mindestens eine Scheibe aus einem Aluminiumoxidwerkstoff gegen eine Scheibe aus einem anderen keramischen Werkstoff wie z. B. Siliciumcarbid-, Siliciumnitrid- oder Zirkonoxid-Werkstoff läuft. Einteilige Scheiben, die eine höhere Härte als Aluminiumoxidwerkstoffe aufweisen, kosten ein Mehrfaches von Scheiben aus Aluminiumoxidwerkstoffen. DE-C3-35 38 261 lehrt die Anwendung eines Verfahrens zur Herstellung einer diamantartigen, harten Kohlenstoffschicht auf Ventilelemente. EP-B-0 216 810 lehrt ein Verfahren zur Herstellung eines Paares plattenförmiger Elemente für ein Ventil, bei dem chemisch-physikalische Gasphasenabscheidungsverfahren für die Beschichtung der scheibenförmigen Elemente gewählt wurden. Es ist bekannt, daß die durch Gasphasenabscheidung aufgebrachten Beschichtungen nur mit großem technischen Aufwand und bei größerer Dicke nur mit langen Abscheidungszeiten aufgebracht werden können. Beschichtungen weisen jedoch häufig den Mangel auf, sich bei gleitendem und reibendem Einsatz vorzeitig von der Unterlage abzulösen und neigen aufgrund der mangelnden Kornverzahnung leicht zu Ausbrüchen, so daß sie dann anders als in massiven Körpern hergestellte Werkstoffe keinen jahrzehntelangen Einsatz gewährleisten. EP-B-0 416 294 schützt eine Ventilkörperpaarung, bei der mindestens ein scheibenförmiger Ventilkörper einen Kunststoffüberzug an der Dichtfläche trägt. Diese Erfindung zielt auf eine fettfrei laufende Reibpaarung Keramik/Kunststoff mit einer Abdichtung durch die Kunststoffschicht ab. Die Weiterentwicklung von Einlaß- und Regelscheiben betrifft immer Ventile, bei denen die Reibpaarung über Jahrzehnte mit niedrigen Reibungskoeffizienten und möglichst wartungsfrei laufen soll. Der Einsatz von einteiligen Scheiben aus teuren Sonderwerkstoffen läßt sich vielfach aus Kostengründen nicht rechtfertigen.

Der Erfindung liegt daher die Aufgabe zugrunde, eine Scheibe vorzuschlagen, die eine reibungsarme Hartstoff-Funktionsoberfläche aufweist und kostengünstig in der Serienfertigung herstellbar ist.

Diese Aufgabe wird erfindungsgemäß durch einen Scheibenverbund zur Verwendung als Einlaß- oder Regelscheibe gelöst, bei dem eine Trägerscheibe und mindestens eine Hartstoffscheibe mit einer Funktionsoberfläche übereinander angeordnet sind, bei dem die übereinander angeordneten Einzelscheiben reib-, kraft- und/oder formschlüssig miteinander verbunden sind. Hierbei weist die Trägerscheibe eine Dicke von mindestens 0,6 mm und die Hartstoffscheibe eine Dicke von 0,05 - 2,5 mm und der Hartstoff der Hartstoffscheibe eine Vickers-Kleinlasthärte von mindestens 1300 HV 0,5 auf.

Eine Dichtscheibe ist ein Element eines Planschieberventils. Der Begriff Dichtscheibe wird häufig als Oberbegriff von Einlaß-, Grund-, Kontroll-, Regel- und Steuerscheiben verwendet; bezüglich der Vielzahl der Unterbegriffe wird hier nur von Einlaß- bzw. von Regelscheiben gesprochen. Eine Einlaßscheibe nimmt die ankommenden Flüssigkeitsströme auf, während eine Regelscheibe die zugehörigen Flüssigkeitskanäle in Verbindung mit der Einlaßscheibe sperrt, teilweise öffnet oder gänzlich öffnet. Der einzelne Flüssigkeitsstrom oder der aus mehreren Flüssigkeitskanälen ankommende und gemischte Flüssigkeitsstrom wird schließlich über mindestens einen anderen Kanal durch die Einlaßscheibe hindurch weitergeleitet.

Der Scheibenverbund kann die gleiche äußere geometrische Ausführungsform aufweisen wie eine der bekannten einteiligen Einlaß- und Regelscheiben. Die Gesamtdicke des Scheibenverbundes wird dann der Dicke der zugrundeliegenden einteiligen Scheibe entsprechen. Der Scheibenverbund kann wie die zugrundeliegende einteilige Scheibe Durchbrüche, Taschen, Partien mit gegenüber der Funktionsfläche abgesenktem Niveau und eine von der kreisförmigen Seitenbegrenzung abweichende Kontur aufweisen.

Der Scheibenverbund kann aufgrund einer im Vergleich zu einteiligen Scheiben andersartigen Herstellung Kanäle, schräg laufende Durchbrüche und Kammern aufweisen, die bei einteiligen Scheiben nicht oder nicht kostengerecht ausgeführt werden können. Im Scheibenverbund können Kanäle im Bereich der Grenzfläche zwischen Trägerscheibe und Hartstoffscheibe, bevorzugt mit entsprechenden Ausnehmungen in der Trägerscheibe, angeordnet werden. Beim Trockenpressen von einteiligen keramischen Dichtscheiben können schmale oder schräg verlaufende Durchbrüche nur mit kostenaufwendiger Nachbearbeitung hergestellt werden. Geschlossene, anströmbare und durchströmbare Kammern können ebenfalls im Bereich der Grenzfläche zwischen Trägerscheibe und Hartstoffscheibe, bevorzugt mit Ausnehmungen in der Trägerscheibe, eingebracht werden.

Die Trägerscheibe dient vor allem als verformungsbeständige Unterlage für die Hartstoffscheibe. Die Trägerscheibe weist daher eine Dicke von mindestens 0,6 mm, vorzugsweise von mindestens 0,8 mm, insbesondere von mindestens 1 mm auf. Sie kann aus einem preiswert in der Serie herstellbaren Material wie Kunststoff, Metall, Glas, Silicatkeramik oder einem Verbundwerkstoff bestehen. Insbesondere eignen sich Kunststoffe wie in der Spritzgießtechnik verarbeitbare Materialien auf thermoplastischer Basis, metallische Werkstoffe wie Messing oder korrosionsbeständige Stähle und besonders plastisch herstellbare Silicatkeramiken wie der gut und preiswert in Serie durch Trockenpressen formbare Steatit.

Die Hartstoffscheibe weist auf der der Trägerscheibe abgewandten Seite eine Funktionsoberfläche auf. Sie muß aufgrund des für Jahrzehnte ausgelegten Einsatzes von hoher Verschleißbeständigkeit und daher von hoher Härte sein. Die Vickers-Kleinlasthärte der Hartstoffscheibe beträgt vorzugsweise mindestens 1300 HV 0,5, insbesondere mindestens 1800 HV 0,5, besonders bevorzugt mindestens 2400 HV 0,5. Die Vickers-Kleinlasthärte wird jeweils in Anlehnung an DIN 50133, Ausgabe Februar 1985, gemessen. Die Zusammensetzung des Hartstoffes, sein Gefüge und die Ausbildung der Funktionsoberfläche bestimmen wesentlich das Gleit- und Reibverhalten. Hierbei können Werkstoffvarianten der Hartstoffscheibe von besonderem Interesse sein, die in statistisch verteilten Abständen größere Poren und/oder größere Bereiche einer weichen, tiefer ausarbeitenden zweiten Phase aufweisen. Die Dicke der Hartstoffscheibe kann vorzugsweise 0,2 bis 2 mm und besonders bevorzugt 0,4 bis 1,6 mm betragen. Als Hartstoffscheiben eignen sich insbesondere keramische Werkstoffe und Hartmetalle, die als Folie oder Folienverbund in Folientechnik hergestellt werden, sowie andere metallische Werkstoffe, die zu Blechen verarbeitet werden. Die Herstellungsverfahren für Träger- und Hartstoffscheiben aus den genannten Werkstoffen sind hinreichend bekannt.

Die Verbindung der Trägerscheibe mit der Hartstoffscheibe kann durch Kleben erfolgen. Die Klebetechnik und die organischen und anorganischen Klebemittel sind bekannt. Die Verklebung kann vollflächig oder über bestimmte Partien der Grenzfläche zwischen der Trägerscheibe und der Hartstoffscheibe erfolgen. Die mechanische Verzahnung dient der form- und/oder kraftschlüssigen Verbindung der Trägerscheibe mit der Hartstoffscheibe und kann über Mitnehmer und Ausnehmungen, über Stege, Sicken und/oder kraftschlüssigen Verschraubungen erfolgen. Zur zusätzlichen Sicherung einer Klebeverbindung kann eine mitwirkende mechanische Verzahnung förderlich sein. Die Verbindung kann in Ausnahmefällen durch Löten anstelle des Klebens ausgeführt werden. Die kraft- und/oder formschlüssige Verbindung der Trägerscheibe mit der Hartstoffscheibe kann durch reibschlüssige Verbindung von rauhen, aneinandergrenzenden Partien der Grenzfläche zwischen Trägerscheibe und Hartstoffscheibe zusätzlich gesichert werden.

Die Vorteile der Erfindung liegen in der optimierten Anpassung der Trag- und Dichtfunktion der Dichtscheiben, in der kostengünstigeren Fertigung, in vielfältigen neuen geometrischen Varianten, die bisher nicht oder nicht kostengerecht eingebracht werden konnten und in der einfachen Einbindung einer Hartstoffscheibe in das sie umgebende Gehäuse.

### Beispiele:

### Beispiel 1:

Eine Trägerscheibe aus Messing von 1,2 mm Dicke und von 12,7 mm Außendurchmesser wurde durch Kleben mit einer keramischen Scheibe mit einem Al₂O₃-Gehalt von 99 Gew.-% und von 0,5 mm Dicke und 12,7 mm Außendurchmesser verbunden. Die keramische Scheibe weist eine Vickers-Kleinlasthärte von 1900 HV 0,5 auf. Die Form der Trägerscheibe wurde durch bekannte Verfahren der metallischen Fertigung und Bearbeitung gewonnen. Die Form der Hartstoffscheibe wurde durch Stanzen einer elastischen Folie vor dem Brennen ausgebildet. Die Trägerscheibe und die Hartstoffscheibe erfuhren nach dem Kleben an den im Scheibenverbund nach außen weisenden Kanten einen verrundeten Kantenbruch. Beide Scheiben wurden überall, wo sie sich im Scheibenverbund überlappen, vollflächig verklebt. Es wurde ein in der Technik häufig verwendetes Klebemittel eingesetzt und kurze Zeit unter Druck belastet. Die Funktionsoberfläche wurde im Scheibenverbund geschliffen. Der Scheibenverbund erwies sich im Sanitärarmaturen-Dauertest über jeweils 5.000 Öffnungs- und Schließvorgänge als genauso beständig und von den Reib- und Gleiteigenschaften auf Dauer geeignet wie einteilige Hartstoffscheiben von gleicher äußerer geometrischer Ausführungsform.

### Beispiel 2:

Es wurde eine Trägerscheibe aus einem Kunststoff auf Basis Polypropylen von 4 mm Dicke und von 38 mm Außendurchmesser durch Spritzgießen hergestellt. Als Hartstoffscheibe wurde ein Folienverbund aus zwei zusammengesinterten Folien aus Silicium-infiltriertem Siliciumcarbid (SiSiC) in einer Dicke von 1,56 mm und mit einem Außendurchmesser von 38 mm eingesetzt. Dieser Werkstoff wurde in einer sehr feinkörnigen Variante mit SiC-Körnungen nicht über 15 µm hergestellt. Der SiSiC-Werkstoff wies eine Vickers-Kleinlasthärte von etwa 2100 HV 0,5 auf. Die Hartstoffeinzelfolien wurden durch Flüssigkeitsstrahlschneiden aus der grünen keramischen Folie herausgetrennt, über eine Laminierschicht unter Druck zusammenlaminiert und beim Infiltrieren mit Silicium zum Folienverbund zusammengesintert. Die der Trägerscheibe zugewandte Hartstoffscheibe führte im Vergleich zu der zweiten Einzelfolie zusätzlich drei Ausnehmungen, in die drei stegförmige Mitnehmer der Trägerscheibe paßgerecht eingreifen. Die Einzelfolie mit der Funktionsoberfläche erhielt anders als die benachbarte Einzelfolie zwei längliche Ausnehmungen als Schmiertaschen. Der am Rand stufenförmig ausgebildete Folienverbund aus SiSiC wurde seitlich mit Polypropylen umspritzt.

### Beispiel 3:

Ein Scheibenverbund aus einer Trägerscheibe aus korrosionsbeständigem Chrom-Nickel-Stahl und einer Hartstoffscheibe aus gesintertem Siliciumcarbid (SSiC) wurde wie in Beispiel 1 gefertigt. Der SSiC-Werkstoff wies eine Vickers-Kleinlasthärte von etwa 2800 HV 0,5 auf. Zusätzlich wurden die Seiten der Hartstoffscheibe abgeschrägt, so daß die Funktionsoberfläche kleiner als die Rückseite der Hartstoffscheibe ausgebildet war. Nach dem Kleben wurde der Scheibenverbund zusätzlich mit einem Kunststoff auf Basis Polypropylen in einer Spritzgußmaschine ummantelt, wobei der Kunststoff nicht senkrecht über die Funktionsoberfläche des Scheibenverbunds hinausragte. Die Hartstoffscheibe wurde hierbei schwalbenschwanzartig eingehüllt.

### Beispiel 4:

Ein Scheibenverbund aus einer Trägerscheibe aus Kunststoff auf Basis Polypropylen wurde wie in Beispiel 2 mit einer Hartstoffscheibe verbunden, die jedoch aus einer gegen Wasser besonders korrosionsbeständigen Nickel-haltigen Hartmetallfolie bestand. Die aneinandergrenzenden Oberflächen der Trägerscheibe und der Hartstoffscheibe wurden durch Schleifen so aufgerauht, daß sie durch maßgerechtes Zusammenfügen der rauhen Oberflächen auch reibschlüssig miteinander verbunden wurden. Der durch Zusammenfügen reibschlüssig erzeugte und über Mitnehmer und Aufnehmungen zusätzlich paßgerecht verankerte Scheibenverbund weist drei Durchbrüche für die Kalt- und Warmwasserströme der Mischarmatur auf. Zwei der drei Durchbrüche wurden hierbei mit einer Schräge von 45° durch die Trägerscheibe geführt. Solche schrägliegenden Durchbrüche in keramischen Körpern können nicht durch eine einfache Trockenpreßtechnik erzeugt werden.

## Patentansprüche

1. Scheibenverbund zur Verwendung als Einlaß- oder Regelscheibe, dadurch gekennzeichnet, daß eine Trägerscheibe und mindestens eine Hartstoffscheibe mit einer Funktionsoberfläche übereinander angeordnet sind, daß die Träger- und die Hartstoffscheibe miteinander reib-, kraft-, form- und/oder stoffschlüssig verbunden sind, daß die Trägerscheibe eine Dicke von mindestens 0,6 mm und die Hartstoffscheibe eine Dicke von 0,05 bis 2,5 mm aufweist und daß die Hartstoffscheibe aus einem Werkstoff mit einer Vickers-Kleinlasthärte von mindestens 1300 HV 0,5 besteht.

2. Scheibenverbund gemäß Anspruch 1, dadurch gekennzeichnet, daß die Trägerscheibe eine Dicke von mindestens 0,8 mm, vorzugsweise von mindestens 1 mm aufweist.

3. Scheibenverbund gemäß Anspruch 1 oder 2, dadurch gekennzeichnet, daß die Trägerscheibe aus Kunststoff, Metall, Glas, Silicatkeramik oder einem Verbundwerkstoff besteht.

4. Scheibenverbund gemäß einem der Ansprüche 1 bis 3, dadurch gekennzeichnet, daß die Hartstoffscheibe eine Vickers-Kleinlasthärte von mindestens 1800 HV 0,5, vorzugsweise von mindestens 2400 HV 0,5 aufweist.

5. Scheibenverbund gemäß einem der Ansprüche 1 bis 4, dadurch gekennzeichnet, daß die Hartstoffscheibe aus Siliciumcarbid, Siliciumnitrid, Zirkonoxid, Aluminiumoxid oder Hartmetall besteht.

6. Scheibenverbund gemäß einem der Ansprüche 1 bis 5, dadurch gekennzeichnet, daß die Hartstoffscheibe eine Dicke von 0,2 bis 2 mm, insbesondere von 0,4 bis 1,6 mm aufweist.

7. Scheibenverbund gemäß einem der Ansprüche 1 bis 6, dadurch gekennzeichnet, daß die Hartstoffscheibe kleiner ist als die Trägerscheibe und daß die Trägerscheibe so ausgestaltet ist, daß sie die Hartstoffscheibe seitlich mindestens teilweise umfaßt, wobei die die Hartstoffscheibe umfassende Trägerscheibe zumindest im Bereich einer dagegen laufenden Dichtscheibe nicht senkrecht über die Ebene der Funktionsoberfläche der Hartstoffscheibe hinausragt.

8. Scheibenverbund gemäß einem der Ansprüche 1 bis 7, dadurch gekennzeichnet, daß aneinandergrenzende Flächen der Träger- und der Hartstoffscheibe eine Grenzfläche aufweisen, in deren Bereich Kanäle, schräg liegende Durchbrüche und/oder Kammern angeordnet sind.

9. Verfahren zur Herstellung eines Scheibenverbundes, dadurch gekennzeichnet, daß eine Trägerscheibe und mindestens eine Hartstoffscheibe mit einer Funktionsoberfläche übereinander angeordnet werden und aneinandergrenzende Flächen aufweisen und daß eine reib-, kraft-, form- und/oder stoffschlüssige Verbindung der Trägerscheibe mit der Hartstoffscheibe durch Kleben, mechanische Verzahnung und/oder Zusammenfügen von rauhen, aneinandergrenzenden Flächen hergestellt wird.

10. Verfahren zur Herstellung eines Scheibenverbundes gemäß Anspruch 9, dadurch gekennzeichnet, daß die Hartstoffscheibe in keramischer Folientechnik, als Hartmetallfolie oder als metallisches Blech hergestellt wird.

11. Verfahren zur Herstellung eines Scheibenverbundes gemäß Anspruch 9 oder 10, dadurch gekennzeichnet, daß die Trägerscheibe aus Kunststoff besteht und daß die Trägerscheibe mit der Hartstoffscheibe durch Schweißen von Kunststoff verbunden wird.

12. Verwendung eines Scheibenverbundes gemäß einem der Ansprüche 1 bis 8 als Einlaß- oder Regelscheibe in Mischarmaturen.

13. Verwendung eines Scheibenverbundes gemäß einem der Ansprüche 1 bis 8 als Einlaß- oder Regelscheibe in Getränkezubereitungsvorrichtungen.
